Europäisches Patentamt

European Patent Office

Office européen des brevets

(11) Publication number: **0 395 303**
**A2**

# EUROPEAN PATENT APPLICATION

(21) Application number: 90304206.7

(51) Int. Cl.⁵: **F16L 17/00, F16L 33/16**

(22) Date of filing: 19.04.90

(30) Priority: 26.04.89 GB 8909525

(43) Date of publication of application:
**31.10.90 Bulletin 90/44**

(84) Designated Contracting States:
**AT BE CH DE DK ES FR GB GR IT LI NL SE**

(71) Applicant: **THERMOPOL LIMITED**
**Woolborough Lane**
**Crawley, West Sussex RH10 2UW(GB)**

(72) Inventor: **Miles, Michael George**
**Highcroft Court**
**Sharpthorne, West Sussex RH19 4HU(GB)**
Inventor: **Cannon, David William Charles**
**3 Glory Mead**
**Dorking, Surrey RH4 2NH(GB)**

(74) Representative: **MacFarlane, John Anthony**
**Christopher et al**
**PAGE & CO Temple Gate House Temple**
**Gate**
**Bristol BS1 6PL(GB)**

(54) **Flexible hoses.**

(57) A flexible hose (1) mounted over a hollow member (2) has within its portion that is mounted over the hollow member a lip seal (5) extending all around the inner wall of the hose. The lip seal (5) extends away from the inner wall obliquely to the wall in the direction away from the adjacent end of the hose (1) and is disposed between abutments (3,4) extending away from the inner wall of the hose and engaged with the hollow member (2). Prior to assembly, the lip seal (5) projects further into the interior of the hose (1) than the abutments (3,4) so that in the assembled condition the lip seal is pushed outwardly by the hollow member with a gap (6) left between the opposing faces of the inner wall of the hose (1) and the lip seal (5). A fastener (8) secured around the end portion of the hose (1) holds the abutments (3,4) fast against the hollow member (2) with the abutments protecting the lip seal (5) from the effect of this securing force. It is the lip seal (5) that seals against internal pressure that acts on the lip seal to reinforce the sealing action of this seal.

FIG.1

## FLEXIBLE HOSES

This invention relates to flexible hoses. The invention is particularly concerned with flexible hoses for use in turbocharged motor vehicle engine installations.

It has been required to provide more power in vehicles as permitted vehicle weights have increased over the years. A well known method of doing this is to turbocharge the engine so that air under pressure is supplied to the cylinders to provide more complete combustion and more power than is available by taking air into the cylinder at atmospheric pressure. Air delivered to the engine by a turbocharger has its temperature raised considerably because the turbocharger is driven by engine exhaust gases and the heat from these passes to the turbocharger compressor portion which delivers the air to the engine. This heating effect reduces the engine efficiency somewhat so that not all of the extra power theoretically available is achieved. To combat this intercooling has been used. This entails passing the turbocharged engine intake air at its higher pressure and temperature through a heat exchanger where it is cooled before it is introduced into the engine cylinder for combustion.

It is very common for turbocharger and intercooler interconnections and connections to the engine intake system to be made by silicone rubber hoses. This allows relative movement to be economically accommodated and also allows the easy achievement of complex hose shapes which are sometimes necessary due to overall engine compartment design considerations. These silicone rubber hoses are fitted over parallel metal pipework both on the turbocharger and intercooler and on the engine intake system and are secured with worm drive clamps and clips.

As higher power outputs are sought from existing engines, the turbocharged air pressures are increasing. Typical current values of 1-2 bar (gauge) may be increased to 3-4 bar (gauge) and even higher. At these elevated pressures the previous method of fixing using worm drive clamps becomes unreliable and leads to excessive amounts of leakage. Merely increasing the torque of the fixing will not reduce the leakage as it will lead to damage of the hose which in turn can lead to increased leakage.

Patent specification GB 2 139 723 A discloses a flexible hose in which a slit lying oblique to the hose axis is formed around the inner wall of one end of the hose. One of the cut faces of this slit constitutes a surface facing in a direction having an axial component whereby when the hose end is the female member of a joint with another hollow member, the action upon this surface of fluid pressure within the bore of the hose tends to cause the internal radius of the hose adjacent the surface to diminish so that the hose grips the other member more firmly. This firmer pressure is achieved only when the installation is under pressure. At other times the hose is retained on the other member either by virtue of its fit on the other member alone, or by the action of a clip. Such a clip becomes necessary where the connection between the hose and the other member has to resist relative movement between the hose and the other member at all times and not only when the hose is under full internal pressure, but it is essential that the presence of the clip should have no adverse effect on the pressure-receiving surface mentioned above. In GB 2 139 723 A the clip overlaps the slit which provides the pressure-receiving surface so that tightening of the clip to any significant extent will interfere with the desired operation of the pressure-receiving surface, and even damage the part of the hose defining this surface.

According to the present invention there is provided a flexible hose for mounting over a hollow member, the hose having within its portion that is to mounted over the hollow member a lip seal extending all around the inner wall of the hose, this lip seal extending away from the inner wall obliquely to the wall in the direction away from the adjacent end of the hose; characterised in that the lip seal is disposed between abutments extending from the inner wall of the hose for engagement with the hollow member, the lip seal projecting further into the interior of the hose than the abutments so as to be pushed outwardly by the hollow member with a gap left between the opposing faces of the inner wall of the hose and the lip seal when the hose is mounted on the hollow member with the abutments engaged with the hollow member. With this hose mounted on a hollow member a worm drive clamp or other fastening can be tightened around the hose end portion to hold the abutments fast against the hollow member and thus to secure the hose against axial displacement relative to the hollow member. This radial securing force acts through the abutments and the seal is protected, by the abutments, from interference by, or damage from, the radial securing force and it is the lip seal that seals against internal pressure that acts on the lip seal to reinforce its sealing action.

The invention also provides a flexible hose and a hollow member for connecting the hose and the hollow member to a further hollow member, the hose being mounted over its hollow member and having within its portion that is mounted on this hollow member a lip seal extending all around the inner wall of the hose, this lip seal extending away from the inner wall obliquely to the wall in the direction away from the adjacent end of the hose; characterised in that the lip seal is disposed between an abutment extending from the inner wall of the hose and engaged in a complimentary recess in the hollow member on which the hose is mounted, and an outwardly directed abutment of this hollow member that is engaged by the inner wall of the hose, the extent over which the lip seal projects into the interior of the hose being such that with the abutments engaged in the recess and with the inner wall of the hose, the lip seal is pushed outwardly by the hollow member on which the hose is mounted with a gap left between the opposing faces of the inner wall of the hose and the lip seal. Here also the abutments serve to protect the seal from interference by, or damage from, radial securing force exerted by a fastener tightened around the hose end portion and it is the lip seal that seals against internal pressure that acts on the lip seal to reinforce its sealing action.

For a better understanding of the invention and to show how the same may be carried into effect, reference will now be made, by way of example, to the accompanying drawings, in which:-

Figure 1 is a side view half in section of a hose with a first form of sealing arrangement, shown connected at each end to another hollow member in a female/male relationship,

Figure 2 is a view similar to Figure 1 of a hose with a second form of sealing arrangement,

Figure 3 at A to O shows various other forms of sealing arrangement,

Figure 4 illustrates how the hose is constructed, and

Figures 5 and 6 are sectional views of a detail of a modified form of Figure 1 and Figure 2 respectively.

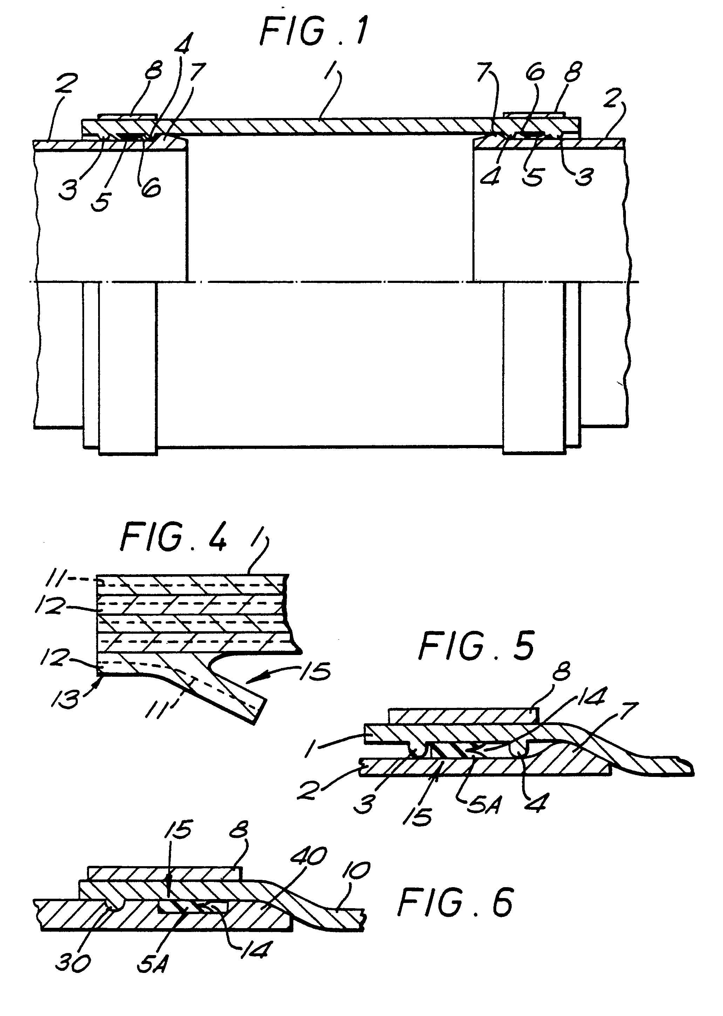

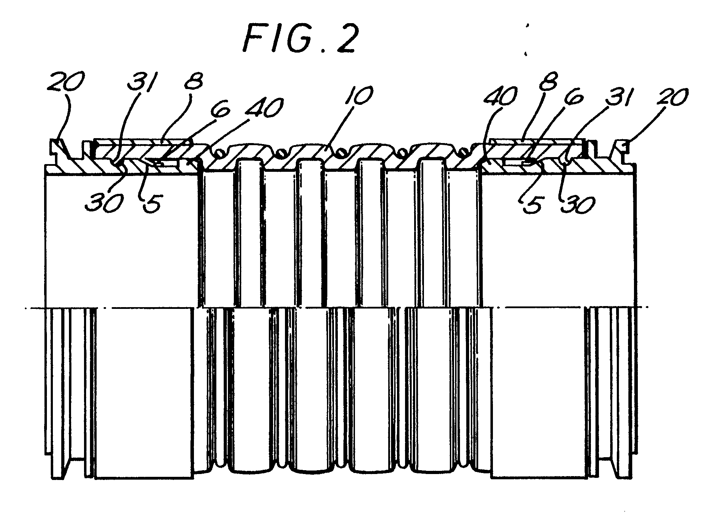

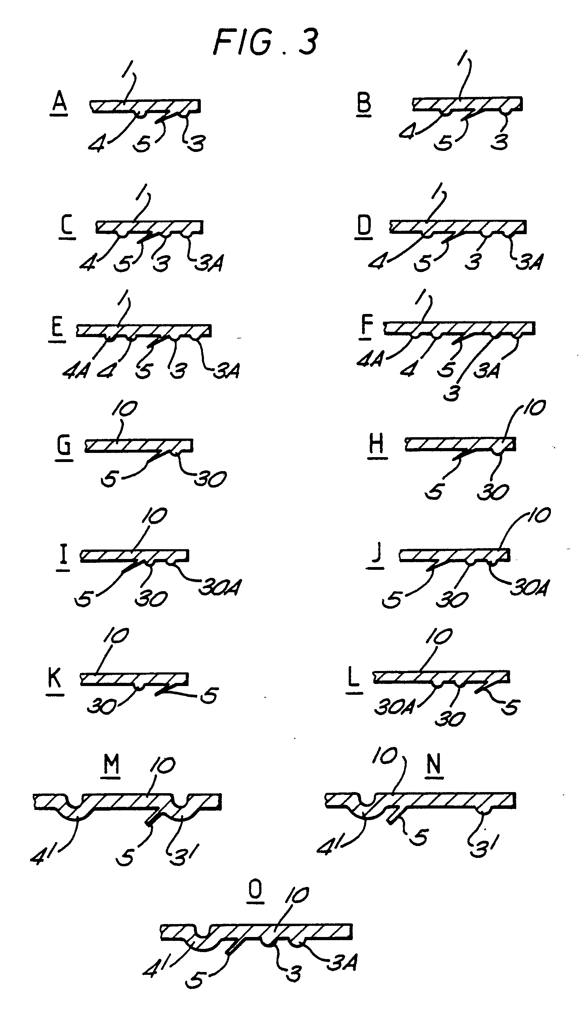

Referring first to Figure 1, the hose 1 is a spiral wrapped flexible hose. Each end of the hose is fitted, as a female member, onto a hollow parallel-sided length of pipe 2.

Near each of its ends the hose 1 is provided internally with a pair of abutments constituted by first and second beads 3 and 4, these beads being spaced apart axially along the hose so that with respect to the length of the hose the bead 3 is an outer bead and the bead 4 is an inner bead.

Between each pair of beads 3, 4 there is a lip seal 5 around the entire inner wall of the hose, formed by another ply of the spiral wrapped body of the hose. This lip seal 5 extends away from the inner wall of the hose body obliquely to the wall and in the direction away from the adjacent open end of the hose. The lip seal 5 extends further from the wall of the hose 1 than the bead 3, 4 on each side of it so that when the hose is fitted to the length of pipe 2, as shown in Figure 1, the end portion of each lip seal 5 is pushed outwardly by the pipe wall and lies along this wall, leaving a gap 6 between the seal and the inner wall of the hose. To assist initial location of the hose 5 on the lengths of pipe 2 the outer beads 4 co-operate with outwardly directed flanges 7 at the ends of the lengths of pipe .

When fitted to the lengths of pipe 2 the hose 1 is made fast at each end by a worm drive clamp 8 which is tightened around the hose. Alternatively a metal ring can be crimped around the hose to compress it. The mechanical connections thus formed serve to secure the hose 1 to the lengths of pipe 2 and to hold the hose in position against mechanical forces acting to stretch or compress the hose, the beads 3, 4 at each end of the hose being held fast against the lengths of pipe by the clamps or crimped rings. Each clamp, or crimped ring, also extends around the lip seal 5 that is between the pair of beads 3, 4 that the clamp or ring acts upon. However, the beads protect the seal that is between them from interference by, or damage from, the clamping action of the clamp or ring.

Whilst the clamps 8, or the crimped rings, serve at all times to secure the hose 1 to the lengths of pipe 2, sealing when the interior of the hose and pipes is under pressure is effected by the lip seals 5. The action of this pressure in the gaps 6 between the seals 5 and the hose wall ensures an effective sealing of the seals 5 on the lengths of pipe 2. Substantial increase in internal pressure can be accommodated, with the effectiveness of the seal being enhanced as the internal pressure increases, but the beads 3, 4 are not required to play any part in containing the internal pressure. Hence the gripping action of the clamps or crimped rings, effectively on the beads 3, 4, needs only to be sufficient to hold the hose secure against mechanical forces and the beads 3, 4 do not have to perform any significant sealing function. Damage to the hose by tightening of the clamps or crimping of the rings is therefore negligeable as significant tightening is not necessary.

It will be appreciated that the hose 1 with its beads 3 and 4 and the lip seals 5 can be fitted to any pipe lengths of an outer diameter suitable to receive the hose.

The hose 10 shown in Figure 2 is for use with a pair of flanged metal inserts 20, 20 that are in turn for assembling into pipework at mating flanges utilising O-ring seals. Near each end of the hose 10 there is an internal bead 30 that is engaged in a corresponding recess 31 in the insert 20 on which the hose end is fitted. Inwardly of the bead 30 at each end, in the axial direction of the hose, there is a lip seal 5 as already described with a gap 6, also as already described, between the seal and the inner wall of the hose. At each end the seal 5 is between the bead 30 and an outwardly directed flange 40 at the inner end of the insert 20. A worm drive clamp 8, or a crimped ring, as already described serves to secure each end of the hose 10 to the insert 20 at this end.

In the form of Figure 2 the interaction between the clamp 8 (or crimped rings), the beads 30 and the flanges 40 is as that of the clamps 8 and (or crimped rings), the beads 3 and the beads 4 in the form of Figure 1. Each seal 5 is between two abutments, the bead 30 and the flange 40, which act as do the abutments that are the beads 3 and 4 in the form of Figure 1. Under internal pressure the seals 5 operate as do the seals 5 in Figure 1. Good location of the hose 5 axially of the insert 20, 20 is achieved by the engagements of the beads 30 in the recesses 31.

Figure 3 at A and B shows two alternative formations for a lip seal 5 between beads 3 and 4, generally as shown in Figure 1.

Figure 3 at C and D shows two alternative formations for a lip seal 5 between beads 3 and 4 with a further bead 3A outboard of the bead 3.

Figure 3 at E and F shows two alternative formations for a lip seal 5 between two beads 3 and 3A on one side of it and two beads 4 and 4A on the other side of it.

Figure 3 at G and H shows two alternative formations for a lip seal 5 and single bead 30, generally as shown in Figure 2.

Figure 3 at I and J shows two alternative formations in which there is a lip seal 5 and a bead 30 and a further bead 30A nearer the free end of the hose 10 than the bead 30. It will be appreciated that a further complementary recess for the bead 30A is provided in unit 20.

Figure 3 at K and L shows two alternative forms in which the lip seal 5 is outboard of a single bead 30 or two beads 30 and 30A. In these examples a part of each insert 20 outboard of the seal 5 acts instead of the flange 40 as an abutment on one side of the seal 5 the abutment(s) on the other side of the seal 5 being the bead 30 or the beads 30, 30A.

In all the forms described there are utilised the sealing properties of a flexible lip formed within the hose itself and which is deformed by increasing internal pressure to seal against the hollow member on which the hose end is fitted. Sealing of the hose on the hollow member is not dependant on the force of clamping or crimping and the lip is protected against interference by or damage from, the clamping or crimping forces.

A particular application of the flexible hoses that have been described above is in turbocharged motor vehicle engine installations, connecting turbocharger/intercooler systems to the engine intake system.

Typically in known hoses not provided with a lip seal as described above, fixing clamps will be tightened to torque figures of 5 to 7 N/m on assembly. After some hours of running the clamp will then need to be re-tightened as the hose settles and suffers varying degrees of compression set. Further tightening of the clamps may also be needed at albeit infrequent times in the future.

By providing the lip seal herein described it is necessary to tighten the clamps to only about 2 to 3 N/m torque and there is no need to re-tighten subsequently. Such low torque settings minimise damage to the hose in the assembly operation. Also the hose is much more able to withstand clamps applied not at right angles to the pipework but at some other angle. In these latter instances high torque settings on the clamps can lead to the clamps biting into part of the hose circumference and causing premature failures.

The lip seal will be effective over a large range of angles relative to the internal wall of the hose.

Spiral wrapping of hoses lends itself to the incorporation of the lip seals as merely another ply in the construction fabricated into the internal diameter of the main hose body as shown in Figure 4. The hose is formed from a material blank that has fibre reinforcement 11 of, for example, polyaramid, embedded in a silicone rubber coating 12, this blank being wound around a mandrel. The lip seal is part of the innermost layer 13 thus formed. This form of construction also facilitates building in the beads as integral parts of the hoses. Alternatively, lip seals and/or beading can be provided separately of the hose and there are shown in Figures 5 and 6 separate lip seals 5A provided for a hose 1 as shown in Figure 1 (Figure 5) and for a hose 10 as shown in Figure 2 (Figure 6). This separate lip seal 5A is the inner lip of a V-groove 14 open in the direction away from the adjacent end of the hose 1 or 10 of a ring of resilient material positioned at the same location as the lip seal 5 which it replaces, the lip seal 5A being otherwise as the lip seals 5 already described and operating in the same way.

A further alternative, as regards providing, within the hose, beads with the lip seal therebetween, is to utilise, in a convoluted hose, convolutions of the hose with rubber and fabric reinforcement forming the beads. The beads thus provided can be larger and more robust than the beads so far described above. Possible formations are shown in Figure 3 at M, N and O which are similar to the formations shown at A, B and D respectively but having, at M, beads 3′ and 4′, and at each of N and O a bead 4′, in which each bead 3′, 4′ is formed by a convolution of the hose.

To assist accurate location of the lip seal and the hollow member to which it is to be fitted, the hose can be provided with an internal groove near the lip seal for engagement with a complimentary ridge provided on the hollow member.

## Claims

1. A flexible hose (1) for mounting over a hollow member (2), the hose having within its portion that is to mounted over the hollow member a lip seal (5) extending all around the inner wall of the hose, this lip seal extending away from the inner wall obliquely to the wall in the direction away from the adjacent end of the hose; characterised in that the lip seal (5) is disposed between abutments (3,4 or 3′,4′) extending from the inner wall of the hose for engagement with the hollow member (2), the lip seal (5) projecting further into the interior of the hose (1) than the abutments (3,4 or 3′,4′) so as to be pushed outwardly by the hollow member (2) with a gap (6) left between the opposing faces of the inner wall of the hose (1) and the lip seal (5) when the hose (1) is mounted on the hollow member (2) with the abutments (3,4 or 3′,4′) engaged with the hollow member (2).

2. A flexible hose (10) and a hollow member (20) for connecting the hose and the hollow member to a further hollow member, the hose (10) being mounted over its hollow member (20) and having within its portion that is mounted on this hollow member a lip seal (5) extending all around the inner wall of the hose, this lip seal extending away from the inner wall obliquely to the wall in the direction away from the adjacent end of the hose; characterised in that the lip seal (5) is disposed between an abutment (30) extending from the inner wall of the hose (10) and engaged in a complimentary recess (31) in the hollow member (20) on which the hose (10) is mounted, and an outwardly directed abutment (40) of this hollow member (20) that is engaged by the inner wall of the hose (10), the extent over which the lip seal (5) projects into the interior of the hose (10) being such that with the abutments (30,40) engaged in the recess (31) and with the inner wall of the hose (10), the lip seal (5) is pushed outwardly by the hollow member (20) on which the hose (10) is mounted with a gap (6) left between the opposing faces of the inner wall of the hose (10) and the lip seal (5).

3. A flexible hose or flexible hose and hollow member as claimed in claim 1 or 2, wherein the lip seal (5) is integral with the hose (1 or 10).

4. A flexible hose or flexible hose and hollow member as claimed in claim 1 or 2, wherein the lip seal (5) is separate from the hose (1 or 10).

5. A flexible hose or flexible hose and hollow member as claimed in claim 1, 2, 3 or 4, wherein the or each abutment (3,4,3′,4′ or 30) protruding from the inner wall of the hose (1 or 10) is integral with the hose (1 or 10).

6. A flexible hose or flexible hose and hollow member as claimed in any one of the preceding claims, wherein there is more than one abutment (3,3A or 30, 30A) on at least one side of the lip seal (5).

7. A flexible hose or flexible hose and hollow member as claimed in claim 5 or 6, wherein the hose is a convoluted hose (10) and the or at least one abutment (3′,4′) protruding from the inner wall of the hose (10) is formed by a convolution of the hose (10).

EP 0 395 303 A2

FIG .1

FIG . 4

FIG . 5

FIG . 6

# FIG.2

EP 0 395 303 A2

FIG . 3